# EUROPÄISCHE PATENTANMELDUNG

(11) **EP 1 816 391 A1**
(43) Veröffentlichungstag der Anmeldung: **08.08.2007**
(21) Anmeldenummer: 06002508.7
(22) Anmeldetag: 07.02.2006
(51) Int. Cl.: F21S 8/00, G02B 6/00, G09F 13/18, B60Q 1/32, B60Q 3/02

(54) **Flache Leuchtvorrichtung**

(71) Anmelder: Delphi Technologies, Inc., Troy, MI 48007 (US)
(72) Erfinder: Dubbert, Stefan, 58332 Schwelm (DE); Stanitzok, Ewald, 58256 Ennepetal (DE)
(74) Vertreter: Manitz, Finsterwald & Partner GbR

(57) **Zusammenfassung**

Die Erfindung betrifft eine flache Leuchtvorrichtung mit einem wannenartigen Gehäuseteil (10), einem in dem Gehäuseteil angeordneten Lichtleiter (16) und einem Leuchtmittel, welches wenigstens eine auf einer flexiblen gedruckten Schaltung (12) angeordnete Leuchtdiode (14) umfasst, welche ein für das von der Leuchtdiode (14) ausgestrahlte Licht durchlässiges Material aufweist.

## Beschreibung

Die Erfindung betrifft eine flache Leuchtvorrichtung mit einem wannenartigen Gehäuseteil, einem Leuchtmittel und einem in dem Gehäuseteil angeordneten Lichtleiter.

Derartige Leuchtvorrichtungen sind grundsätzlich bekannt. Sie werden beispielsweise in Kraftfahrzeugen zur Beleuchtung von Türschwellen oder eines vor einer Fahrzeugtür gelegenen Bodenbereichs, als Positionsleuchten oder als Zierleuchten verwendet.

Bei einer bekannten Leuchtvorrichtung umfasst das Leuchtmittel wenigstens eine Leuchtdiode, die auf einer flexiblen gedruckten Schaltung angeordnet ist. Die Bauhöhe dieser Art von Leuchtvorrichtung wird für manche Anwendungen jedoch als zu hoch empfunden.

Eine flachere Bauweise lässt sich durch die Verwendung einer Elektrolumineszenzfolie als Leuchtmittel erreichen. Elektrolumineszenzfölien vermögen jedoch nicht alle Wellenlängen des sichtbaren Bereichs auszustrahlen, so dass es problematisch sein kann, einen gewünschten optischen Eindruck der Leuchtvorrichtung zu erzielen. Darüber hinaus weisen Elektrolumineszenzfolien gegenüber Leuchtdioden nicht nur eine geringere Lebensdauer, sondern auch eine geringere Farbtreue auf, d.h. im Laufe der Zeit kann sich die Wellenlänge des durch eine Elektrolumineszenzfolie emittierten Lichts verändern. Des Weiteren ist zur Ansteuerung einer Elektrolumineszenzfolie eine vergleichsweise komplexe Schaltungselektronik erforderlich.

Der Erfindung liegt die Aufgabe zugrunde, eine flache Leuchtvorrichtung zu schaffen, die bei dauerhaft zuverlässiger Funktion eine reduzierte Bauhöhe aufweist und mit geringerem wirtschaftlichem Aufwand herstellbar ist.

Zur Lösung der Aufgabe ist eine flache Leuchtvorrichtung mit den Merkmalen des Anspruchs 1 vorgesehen.

Die erfindungsgemäße Leuchtvorrichtung umfasst ein wannenartiges Gehäuseteil, einen in dem Gehäuseteil angeordneten Lichtleiter und ein Leuchtmittel, welches wenigstens eine Leuchtdiode umfasst, die auf einer flexiblen gedruckten Schaltung angeordnet ist, welche ein für das von der Leuchtdiode ausgestrahlte Licht durchlässiges Material aufweist.

Da Leuchtdioden im Vergleich zu Elektrolumineszenzfolien eine längere Lebensdauer aufweisen und über ihre gesamte Lebensdauer Licht mit einer zumindest annähernd unveränderlichen Wellenlänge emittieren, ist eine dauerhaft zuverlässige Funktion der erfindungsgemäßen Leuchtvorrichtung sichergestellt. Darüber hinaus ist die Stromversorgung und Ansteuerung von Leuchtdioden mit einem im Vergleich zu Elektrolumineszenzfolien wesentlich geringeren Aufwand hinsichtlich der Schaltungselektronik möglich, wodurch die Leuchtvorrichtung nicht nur weniger störanfällig, sondern auch kostengünstiger herstellbar ist.

Dadurch, dass die flexible gedruckte Schaltung ein für das von der Leuchtdiode ausgestrahlte Licht durchlässiges Material aufweist, die flexible gedruckte Schaltung mit anderen Worten also im ausgestrahlten Wellenlängenbereich transluzent oder sogar transparent ist, kann das von der Leuchtdiode ausgestrahlte Licht durch die flexible gedruckte Schaltung hindurch aus der Leuchtvorrichtung austreten.

Dies ermöglicht es, die flexible gedruckte Schaltung so an dem Gehäuseteil anzubringen, dass die flexible gedruckte Schaltung das wannenartige Gehäuseteil abdeckt, während die Leuchtdiode in das Innere der Vorrichtung weist. Bei einer entsprechenden Verbindung von Gehäuseteil und flexibler gedruckter Schaltung lässt sich das Innere der Leuchtvorrichtung und somit auch die in das Vorrichtungsinnere weisende Leuchtdiode vor äußeren Einflüssen, z.B. Staub und/oder Wasser, schützen, wobei aufgrund der Lichtdurchlässigkeit der flexiblen gedruckten Schaltung ein Lichtaustritt aus der Vorrichtung gewährleistet ist.

Die flexible gedruckte Schaltung erfüllt erfindungsgemäß also eine Doppelfunktion, indem sie die Leuchtdiode nicht nur trägt und mit Strom versorgt, sondern darüber hinaus auch als Abdeckung der Leuchtvorrichtung dient und das Innere der Leuchtvorrichtung und insbesondere die Leuchtdiode vor äußeren Einflüssen schützt. Auf diese Weise kann auf eine zusätzliche Abdeckung zum Verschließen des Vorrichtungsinneren verzichtet werden.

Die Doppelfunktion der flexiblen gedruckten Schaltung ermöglicht es somit nicht nur, die Bauhöhe der Leuchtvorrichtung zu reduzieren, sondern gleichzeitig auch die Anzahl von Bauteilen zu verringern.

Dies ermöglicht eine kostengünstigere Herstellung der Leuchtvorrichtung, wobei der wirtschaftliche Aufwand zur Herstellung der Leuchtvorrichtung außerdem dadurch noch weiter reduziert wird, dass die Leuchtvorrichtung aufgrund der Verwendung einer Leuchtdiode anstelle einer Elektrolumineszenzfolie mit einer einfacheren Schaltungselektronik auskommt.

Im Vergleich zu Leuchtvorrichtungen mit Elektrolumineszenzfolien ist die Wirtschaftlichkeit der erfindungsgemäßen Leuchtvorrichtung aufgrund der höheren Lebensdauer und der besseren Farbtreue von Leuchtdioden auch langfristig gesehen erhöht.

Vorteilhafte Ausbildungen der Erfindung sind den Unteransprüchen, der Beschreibung und der Zeichnung zu entnehmen.

Gemäß einer bevorzugten Ausführungsform ist der Lichtleiter zwischen dem Gehäuseteil und der flexiblen gedruckten Schaltung angeordnet. Der Lichtleiter bewirkt eine Umlenkung des von der Leuchtdiode emittierten Lichts in eine gewünschte Richtung. So ist es mit Hilfe des Lichtleiters zum Beispiel möglich, das von der Leuchtdiode ausgestrahlte Licht so umzulenken, dass die flexible gedruckte Schaltung homogen ausgeleuchtet und somit letztlich eine homogene Lichtabstrahlung durch die Leuchtvorrichtung erreicht wird.

Der Lichtleiter erlaubt es, die Leuchtdiode beispielsweise so auf der flexiblen gedruckten Schaltung anzuordnen, dass das von der Leuchtdiode emittierte Licht vornehmlich in einer zur Oberfläche der flexiblen gedruckten Schaltung parallelen Richtung ausgestrahlt wird. In dieser Anordnung "liegt" die Leuchtdiode gewissermaßen auf der flexiblen gedruckten Schaltung, und die Leuchtvorrichtung lässt sich mit einer noch geringeren Bauhöhe herstellen.

Vorteilhafterweise ist die flexible gedruckte Schaltung stoffschlüssig mit dem Gehäuseteil verbunden. Beispielsweise kann die flexible gedruckte te Schaltung mit einem Wannenrand des Gehäuseteils verklebt, verschweißt oder heiß verstemmt sein. Dies ermöglicht es, das wannenartige Gehäuseteil auf einfache und kostengünstige Weise zu verschließen und das Innere der Leuchtvorrichtung wirksam vor äußeren Einflüssen zu schützen.

Bevorzugt ist an einer Oberseite eines Wannenrandes des Gehäuseteils mindestens eine, sich insbesondere über die gesamte Länge des Wannenrandes erstreckende, nutartige Vertiefung vorgesehen. Die nutartige Vertiefung kann sich beim Verbinden von flexibler gedruckter Schaltung und Wannenrand mit Klebstoff oder aufgeschmolzenem Material der flexiblen gedruckten Schaltung füllen, wodurch eine besonders hohe Dichtigkeit der Verbindung von flexibler gedruckter Schaltung und Gehäuseteil und ein besonders guter Schutz des Inneren der Leuchtvorrichtung vor äußeren Einflüssen erreicht wird.

Gemäß einer weiteren Ausführungsform ist eine und bevorzugt jede Leuchtdiode in einem Randbereich der flexiblen gedruckten Schaltung angeordnet. Dies ermöglicht eine besonders homogene Ausleuchtung der flexiblen gedruckten Schaltung, d.h. also einen besonders gleichmäßigen Lichtaustritt aus der Leuchtvorrichtung. Darüber hinaus wird eine Störung des optischen Eindrucks der Leuchtvorrichtung durch eine durch die Leuchtdiode bzw. die Leuchtdioden verursachte Schattenbildung vermieden.

Vorteilhafterweise ist der Lichtleiter im Bereich einer und bevorzugt jeder Leuchtdiode mit einer Einkoppelstruktur für das von der Leuchtdiode bzw. den Leuchtdioden ausgestrahlte Licht versehen. Dies ermöglicht eine besonders verlustfreie Einkopplung des von dem Leuchtmittel emittierten Lichts in den Lichtleiter, wodurch der Wirkungsgrad der Leuchtvorrichtung erhöht ist.

Gemäß einer weiteren Ausführungsform ist ein Abdeckelement auf die dem Gehäuseteil abgewandte Seite der flexiblen gedruckten Schaltung aufgebracht, z.B. aufgeklebt, oder auf das Gehäuseteil aufgesteckt. Das Abdeckelement schützt die flexible gedruckte Schaltung vor äußeren Einflüssen, insbesondere vor einer mechanischen Beschädigung. Ein aufsteckbares Abdeckelement ist dabei leicht austauschbar.

Die Leuchtvorrichtung kann ferner eine Struktur aufweisen, welche den Austritt des von dem Leuchtmittel emittierten Lichts aus der Vorrichtung beeinflusst. Bei dieser Struktur kann es sich beispielsweise um ein ausleuchtbares Muster oder Zeichen handeln, sie kann auch einen ganzen Schriftzug umfassen.

Die Struktur kann auf die flexible gedruckte Schaltung, insbesondere auf die von dem Lichtleiter abgewandte Seite der flexiblen gedruckten Schaltung, aufgebracht sein. Zum Aufbringen der Struktur eignet sich hierbei z.B. ein Druckverfahren. Alternativ oder zusätzlich kann auch das Abdeckelement mit einer den Lichtaustritt beeinflussenden Struktur versehen sein.

Die Leuchtvorrichtung kann ferner eine an der dem Gehäuseteil abgewandten Seite der Vorrichtung angeordnete Gehäuseverkleidung umfassen. Die Gehäuseverkleidung bietet einen noch besseren Schutz der Leuchtvorrichtung und insbesondere der flexiblen gedruckten Schaltung vor äußeren Einflüssen, beispielsweise vor einer mechanischen Beschädigung. Die Gehäuseverkleidung kann ein Fenster für das von der Leuchtvorrichtung ausgestrahlte Licht aufweisen, wobei die Fenstergröße bevorzugt so gewählt ist, dass ein Bereich der flexiblen gedruckten Schaltung verdeckt ist, in welchem die Leuchtdiode und/oder eine elektrische Leiterbahn angeordnet ist.

Nachfolgend wird die Erfindung rein beispielhaft anhand einer vorteilhaften Ausführungsform unter Bezugnahme auf die beigefügte Zeichnung beschrieben. Es zeigen:
- Fig. 1: eine Explosionsansicht einer erfindungsgemäßen Leuchtvorrichtung;
- Fig. 2: eine Draufsicht auf die Leuchtvorrichtung von Fig. 1;
- Fig. 3: eine Querschnittsansicht der Leuchtvorrichtung von Fig. 1; und
- Fig. 4: einen Teil einer Längsschnittsansicht der Leuchtvorrichtung von Fig. 1.

Die in den Figuren dargestellte erfindungsgemäße flache Leuchtvorrichtung umfasst ein wannenartiges Gehäuseteil 10, eine flexible gedruckte Schaltung 12, an der mehrere Leuchtdioden 14 angebracht sind, und einen zwischen dem Gehäuseteil 10 und der flexiblen gedruckten Schaltung 12 angeordneten Lichtleiter 16.

Das Gehäuseteil 10 umfasst eine im Wesentlichen rechteckige Grundplatte 18 und eine entlang eines Randbereiches der Grundplatte 18 umlaufende, von der Grundplatte 18 abstehende Wand 20, die zusammen mit der Grundplatte 18 einen Gehäuseinnenraum 22 begrenzt.

Die von der Grundplatte 18 abgewandte Oberseite der Wand 20 wird nachfolgend auch als Wannenrand 23 bezeichnet. Der Wannenrand 23 weist eine im Wesentlichen parallel zu der Grundplatte 18 orientierte Auflagefläche 24 für die flexible gedruckte Schaltung 12 auf.

Das Gehäuseteil 10 weist ein Kunststoffmaterial auf und kann z.B. durch ein Spritzgussverfahren hergestellt sein. Zumindest eine zum Gehäuseinnenraum 22 weisende Oberseite 25 der Grundplatte 18 ist derart ausgebildet, dass sie das von den Leuchtdioden 14 emittierte Licht in möglichst geringem Maße absorbiert.

Der Gehäuseinnenraum 22 dient zur Aufnahme des Lichtleiters 16. Der Lichtleiter 16 weist eine plattenförmige Gestalt auf und ist in bekannter Weise aus einem das von den Leuchtdioden 14 emittierte Licht leitenden Material gebildet. Der Lichtleiter kann beispielsweise ein transparentes Kunststoffmaterial, wie z.B. Acrylglas oder Plexiglas, aufweisen.

Die äußeren Abmessungen des Lichtleiters 16 sind an die Abmessungen des Gehäuseinnenraums 22 angepasst. Insbesondere sind die Länge und Breite des Lichtleiters 16 so gewählt, dass der Lichtleiter 16 zumindest annähernd spielfrei in dem Gehäuseinnenraum 22 des Gehäuseteils 10 untergebracht ist. Darüber hinaus ist die Höhe des Lichtleiters 16 so gewählt, dass eine von der Grundplatte 18 abgewandte Oberseite 26 des Lichtleiters 16 im Wesentlichen bündig mit der Auflagefläche 24 des Wannenrandes 23 abschließt.

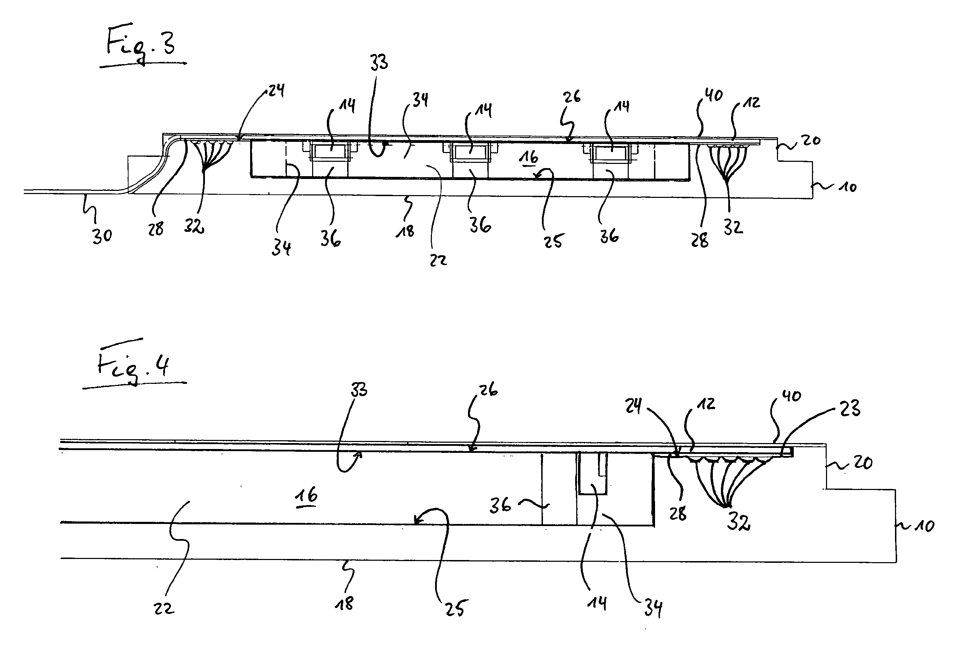

Die flexible gedruckte Schaltung 12 weist ebenfalls eine rechteckige Grundform auf, wobei die Abmessungen der flexible gedruckten Schaltung 12 so gewählt sind, dass sie nicht nur den Gehäuseinnenraum 22 und den darin untergebrachten Lichtleiter 16, sondern auch die Auflagefläche 24 des Wannenrandes 23 im wesentlichen vollständig überdeckt (Fig. 3 und 4).

Durch die flexible gedruckte Schaltung 12 ist der Gehäuseinnenraum 22 verschlossen und vor äußeren Einflüssen, wie z.B. Staub oder Wasser, geschützt. Die flexible gedruckte Schaltung 12 bildet gewissermaßen also eine Abdeckung für das Gehäuseteil 10.

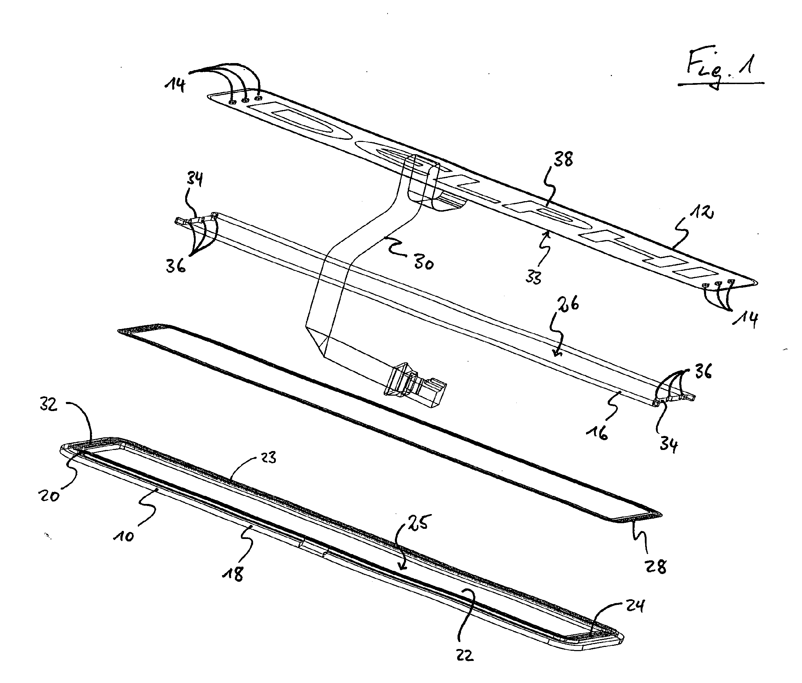

Bei der dargestellten Ausführungsform ist die flexible gedruckte Schaltung 12 stoffschlüssig mit dem Gehäuseteil 10 verbunden. Genauer gesagt sind die flexible gedruckte Schaltung 12 und die Auflagefläche 24 des Wannenrandes 23 miteinander verklebt. Zwischen der flexiblen gedruckten Schaltung 12 und dem Wannenrand 23 befindet sich folglich eine Klebstoffschicht, die in Fig. 1 als rahmenförmiges Teil 28 dargestellt ist.

Alternativ kann die flexible gedruckte Schaltung 12 mit dem Wannenrand 23 auch verschweißt oder heiß verstemmt sein. In diesem Fall würde das rahmenförmige Teil 28 aufgeschmolzenes und anschließend wieder erkaltetes Material der flexiblen gedruckten Schaltung 12 darstellen.

Grundsätzlich ist es auch möglich, die flexible gedruckte Schaltung 12 auf andere Weise mit dem Gehäuseteil 10 zu verbinden, beispielsweise zu verschrauben. Das rahmenförmige Teil 28 würde dann eine zwischen die flexible gedruckte Schaltung 12 und den Wannenrand 23 eingefügte Dichtung darstellen.

Die flexible gedruckte Schaltung 12 weist ein für das von den Leuchtdioden 14 emittierte Licht durchlässiges Trägermaterial auf. Das Trägermaterial kann beispielsweise transparent oder transluzent, d.h: also milchig durchscheinend, sein.

Auf dem Trägermaterial sind nicht gezeigte elektrische Leiterbahnen angeordnet, um die Leuchtdioden 14 mit Strom zu versorgen. Die Leiterbahnen verlaufen in einem Randbereich der flexiblen gedruckten Schaltung 12, d.h. also im Bereich des Wannenrandes 23, um den optischen Eindruck des transparenten bzw. transluzenten Trägermaterials nicht zu beeinträchtigen. Aus der flexiblen gedruckten Schaltung 12 geht ferner ein Flachkabel 30 hervor, mit dessen Hilfe die flexible gedruckte Schaltung 12 an eine Stromspannungsquelle anschließbar ist.

Um eine möglichst hohe Dichtigkeit der Verbindung zwischen der flexiblen gedruckten Schaltung 12 und dem Gehäuseteil 10 zu erreichen, ist der Wannenrand 23 mit mehreren sich parallel zueinander erstreckenden nutartigen Vertiefungen 32 versehen, die entlang der Auflagefläche 24 um den Gehäuseinnenraum 22 herum verlaufen. Bei an dem Gehäuseteil 10 angebrachter flexibler gedruckter Schaltung 12 sind die nutartigen Vertiefungen 32 zumindest annähernd vollständig mit Klebstoff 28 oder, im Falle einer Schweißverbindung, mit Material der flexiblen gedruckten Schaltung 12 gefüllt.

Das Aufbringen der Leiterbahnen auf das transparente bzw. transluzente Trägermaterial der flexiblen gedruckten Schaltung 12 bewirkt eine gewisse Aufrauung des Trägermaterials, wodurch sich die flexible gedruckte Schaltung 12 besonders gut mit dem Gehäuseteil 10 verkleben lässt.

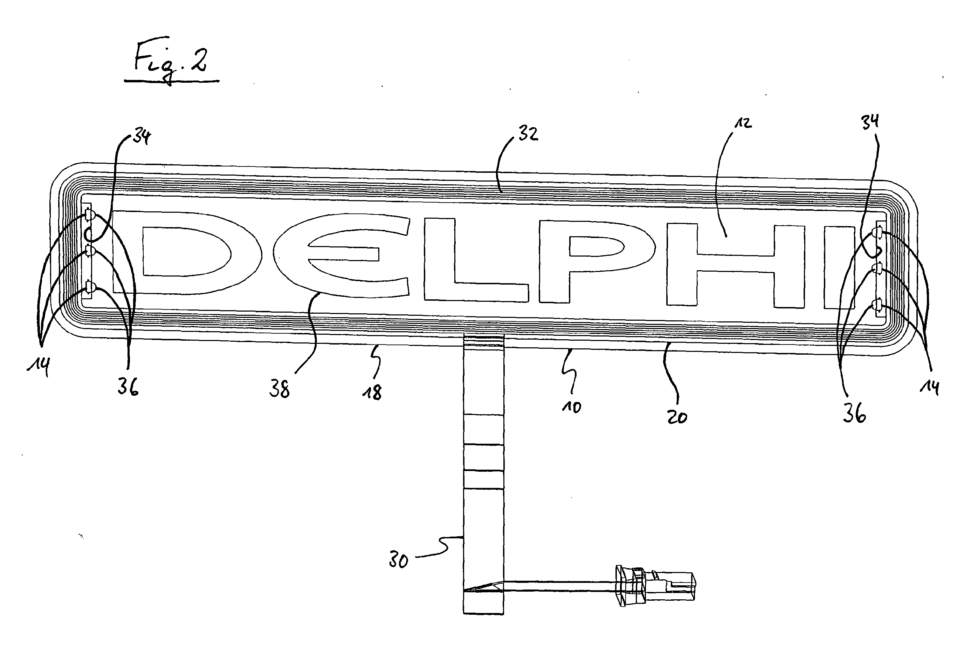

Wie Fig. 1 und 2 zu entnehmen ist, sind jeweils drei Leuchtdioden 14 im Bereich jeder Schmalseite der flexiblen gedruckten Schaltung 12 angeordnet. Die Anzahl der Leuchtdioden 14 kann hiervon jedoch auch abweichen. Außerdem ist es alternativ oder zusätzlich möglich, Leuchtdioden entlang den Längsseiten der flexiblen gedruckten Schaltung 12 anzuordnen.

Die Leuchtdioden 14 sind an einer zum Gehäuseteil 10 weisenden Unterseite 33 der flexiblen gedruckten Schaltung 12 befestigt und ragen in den Gehäuseinnenraum 22 hinein. Um den Leuchtdioden 14 entsprechend Platz zu verschaffen, weist der Lichtleiter 16 an seinen Schmalseiten jeweils eine Aussparung 34 für die Leuchtdioden 14 auf.

Die Leuchtdioden 14 sind ferner so an der flexiblen gedruckten Schaltung 12 montiert, dass das von den Leuchtdioden 14 emittierte Licht vornehmlich parallel zur Unterseite 33 der flexiblen gedruckten Schaltung 12 ausgestrahlt wird. Dabei sind die Leuchtdioden 14 so orientiert, dass sich die Leuchtdioden 14 der einen Schmalseite und die Leuchtdioden 14 der anderen Schmalseite gegenseitig anstrahlen.

Damit das von den Leuchtdioden 14 emittierte Licht möglichst verlustfrei in den Lichtleiter 16 einkoppeln kann, weist der Lichtleiter 16 an seinen Schmalseiten für jede Leuchtdiode 14 eine Einkoppelstruktur 36 auf. Im dargestellten Ausführungsbeispiel sind die Einkoppelstrukturen 36 durch etwa halbzylindrische Vertiefungen gebildet, die den Leuchtdioden 14 entsprechend vorgelagert sind.

Durch den Lichtleiter 16 wird das von den Leuchtdioden 14 emittierte und in den Lichtleiter 16 eingekoppelte Licht um etwa 90° umgelenkt, so dass es durch die flexible gedruckte Schaltung 12 hindurch aus der Leuchtvorrichtung austreten kann. Um Verluste durch Absorption an der Unterseite des Lichtleiters 16 zu minimieren, ist die zum Lichtleiter 16 weisende Oberseite 26 der Grundplatte 18 des Gehäuseteils 10 bevorzugt weiß eingefärbt oder spiegelnd ausgebildet.

Durch den Lichtleiter 16 wird die flexible gedruckte Schaltung 12 homogen mit dem von den Leuchtdioden 14 emittierten Licht ausgeleuchtet. Um einen gewünschten optischen Eindruck zu erzielen, kann die flexible gedruckte Schaltung 12 mit einer Struktur 38 versehen sein, welche den Austritt des Lichts aus der Leuchtvorrichtung beeinflusst. Bei der Struktur 38 kann es sich um ein Zeichen, ein Muster oder, wie im dargestellten Ausführungsbeispiel, um einen Schriftzug handeln. Die Struktur 38 kann beispielsweise mittels eines Druckverfahrens auf die zum Lichtleiter 16 weisende Unterseite 33 oder auf die dem Lichtleiter 16 abgewandte Oberseite 26 der flexiblen gedruckten Schaltung 12 aufgebracht werden.

Alternativ oder zusätzlich ist es auch möglich, ein zusätzliches platten- oder folienartiges Abdeckelement 40 auf die flexible gedruckte Schaltung 12 aufzubringen, beispielsweise aufzukleben, welches mit einer entsprechenden Struktur versehen ist. Anstatt mit der flexiblen gedruckten Schaltung 12 fest verbunden zu werden, kann das Abdeckelement 40 auch in Form einer Abdeckkappe ausgebildet sein, welche auf das Gehäuseteil 10 aufsteckbar ist und dadurch leicht ausgetauscht werden kann.

Die Leuchtvorrichtung kann außerdem durch eine der flexiblen gedruckten Schaltung 12 vorgelagerte Gehäuseverkleidung (nicht gezeigt) geschützt sein, die ein für das aus der Leuchtvorrichtung austretende Licht durchlässiges Fenster aufweist. Das Fenster kann dabei so dimensioniert sein, dass Bereiche der flexiblen gedruckten Schaltung 12 durch die Gehäuseverkleidung verdeckt sind, in denen Leiterbahnen und/oder Leuchtdioden 14 angeordnet sind, so dass der optische Eindruck der Leuchtvorrichtung nicht durch einen durch die Leiterbahnen und/oder Leuchtdioden 14 erzeugten Schattenwurf beeinträchtigt ist.

### Bezugszeichenliste

- 10: Gehäuseteil
- 12: flexible gedruckte Schaltung
- 14: Leuchtdiode
- 16: Lichtleiter
- 18: Grundplatte
- 20: Wand
- 22: Gehäuseinnenraum
- 23: Wannenrand
- 24: Auflagefläche
- 25: Oberseite
- 26: Oberseite
- 28: Klebstoffschicht
- 30: Flachkabel
- 32: Vertiefung
- 33: Unterseite
- 34: Aussparung
- 36: Einkoppelstruktur
- 38: Struktur
- 40: Abdeckelement

## Patentansprüche

1. Flache Leuchtvorrichtung mit einem wannenartigen Gehäuseteil (10), einem in dem Gehäuseteil (10) angeordneten Lichtleiter (16) und einem Leuchtmittel, welches wenigstens eine Leuchtdiode (14) umfasst, die auf einer flexiblen gedruckten Schaltung (12) angeordnet ist, welche ein für das von der Leuchtdiode (14) ausgestrahlte Licht durchlässiges Material aufweist.

2. Leuchtvorrichtung nach Anspruch 1,
**dadurch gekennzeichnet, dass**
der Lichtleiter (16) zwischen dem Gehäuseteil (10) und der flexiblen gedruckten Schaltung (12) angeordnet ist.

3. Leuchtvorrichtung nach Anspruch 1 oder 2,
**dadurch gekennzeichnet, dass**
die flexible gedruckte Schaltung (12) stoffschlüssig mit dem Gehäuseteil (10) verbunden ist.

4. Leuchtvorrichtung nach einem der vorherigen Ansprüche,
**dadurch gekennzeichnet, dass**
die flexible gedruckte Schaltung (12) mit einem Wannenrand (23) des Gehäuseteils (10) verklebt, verschweißt oder heiß verstemmt ist.

5. Leuchtvorrichtung nach Anspruch 4,
**dadurch gekennzeichnet, dass**
der Wannenrand (23) mindestens eine, insbesondere entlang der gesamten Länge des Wannenrandes (23) verlaufende, nutartige Vertiefung (32) aufweist.

6. Leuchtvorrichtung nach einem der vorherigen Ansprüche,
**dadurch gekennzeichnet, dass**
eine und bevorzugt jede Leuchtdiode (14) in einem Randbereich der flexiblen gedruckten Schaltung (12) angeordnet ist.

7. Leuchtvorrichtung nach einem der vorherigen Ansprüche,
**dadurch gekennzeichnet, dass**
der Lichtleiter (16) im Bereich einer und bevorzugt jeder Leuchtdiode (14) mit einer Einkoppelstruktur (36) für das von der Leuchtdiode (14) ausgestrahlte Licht versehen ist.

8. Leuchtvorrichtung nach einem der vorherigen Ansprüche,
**gekennzeichnet durch**
ein an der dem Gehäuseteil (10) abgewandten Seite der Vorrichtung angeordnetes, insbesondere auf das Gehäuseteil (10) aufgestecktes oder mit der flexiblen gedruckten Schaltung (12) verbundenes, Abdeckelement (40).

9. Leuchtvorrichtung nach einem der vorherigen Ansprüche,
**gekennzeichnet durch**
eine Struktur (38), welche den Austritt des von dem Leuchtmittel emittierten Lichts aus der Vorrichtung beeinflusst.

10. Leuchtvorrichtung nach Anspruch 9,
**dadurch gekennzeichnet, dass**
die Struktur (38) auf die flexible gedruckte Schaltung aufgebracht, beispielsweise aufgedruckt, ist.

11. Leuchtvorrichtung nach Anspruch 8,
**dadurch gekennzeichnet, dass**
das Abdeckelement (40) mit einer Struktur (38) versehen ist, welche den Austritt des von dem Leuchtmittel emittierten Lichts aus der Vorrichtung beeinflusst.

## Geänderte Patentansprüche

### Geänderte Patentansprüche gemäss Regel 86(2) EPÜ.

**1.** Leuchtvorrichtung mit einem wannenartigen Gehäuseteil (10), einem in dem Gehäuseteil (10) angeordneten Lichtleiter (16) und einem Leuchtmittel, welches wenigstens eine Leuchtdiode (14) umfasst,
**dadurch gekennzeichnet, dass**
die wenigstens eine Leuchtdiode (14) auf einer flexiblen gedruckten Schaltung (12) angeordnet ist, welche ein für das von der Leuchtdiode (14) ausgestrahlte Licht durchlässiges Material aufweist und welche als Abdeckung der Leuchtvorrichtung dient und das Innere der Leuchtvorrichtung vor äußeren Einflüssen schützt.
